(19) Europäisches Patentamt
European Patent Office
Office européen des brevets

(11) **EP 2 974 959 B1**

(12) **EUROPÄISCHE PATENTSCHRIFT**

(45) Veröffentlichungstag und Bekanntmachung des Hinweises auf die Patenterteilung:
**21.08.2019 Patentblatt 2019/34**

(51) Int Cl.:
**B64D 1/08** *(2006.01)*    **B64D 17/00** *(2006.01)*
**G01P 5/14** *(2006.01)*    **G01P 13/02** *(2006.01)*

(21) Anmeldenummer: **15176286.1**

(22) Anmeldetag: **10.07.2015**

(54) **LUFTDRUCKSONDE FÜR FALLSCHIRM**

AIR PRESSURE PROBE FOR PARACHUTE

SONDE DE PRESSION D'AIR POUR PARACHUTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2014 DE 102014110134**

(43) Veröffentlichungstag der Anmeldung:
**20.01.2016 Patentblatt 2016/03**

(73) Patentinhaber: **Deutsches Zentrum für Luft- und Raumfahrt e.V.**
**51147 Köln (DE)**

(72) Erfinder:
• **Greiner-Perth, Christian**
**96523 Steinach (DE)**
• **Jann, Thomas**
**38543 Hillerse (DE)**

(74) Vertreter: **Aisch, Sebastian**
**Gramm, Lins & Partner**
**Patent- und Rechtsanwälte PartGmbB**
**Freundallee 13 a**
**30173 Hannover (DE)**

(56) Entgegenhaltungen:
**EP-A2- 2 527 251     GB-A- 2 032 860**
**US-A- 2 676 655     US-A1- 2009 026 319**

**Beschreibung**

Die Erfindung betrifft eine Luftdrucksonde zum Erfassen von Luftdruckdaten einer die Luftdrucksonde umgebenden Luftströmung. Die Erfindung betrifft auch ein Messsystem für Gleitfallschirmsysteme wie ein diesbezügliches Gleitfallschirmsystem hierzu.

Im Bereich der Luftfahrt, insbesondere bei Flugzeugen und Hubschraubern, sind für den sicheren Betrieb des Flugobjektes Daten bezüglich der das Flugobjekt umströmenden Luftströmung essentiell. Bei Flugzeugen und Hubschraubern werden diese Luftdruckdaten bspw. mit Hilfe eines Nasenmastes und daran befestigten Strömungssensoren gewonnen oder mit Hilfe von Staudruckmessern und Anstellwinkelfahnen am Rumpf des Flugzeuges gemessen. Für die Ermittlung der Geschwindigkeit des Flugobjektes bezüglich der umgebenden Luftströmung werden Differenzdrucksensoren verwendet, welche die Differenz zwischen Gesamtdruck an der Sondenspitze und dem statischen Druck am Sondenmantel direkt ermitteln können. Da diese Messungen zusätzlich von der Luftdichte und der Umgebungstemperatur abhängen können, müssen weitere Sensoren hinzugezogen werden, um den korrekten Wert zu berechnen (CAS-Calibrated Air Speed). Hierzu werden ein Absolutdrucksensor zur Ermittlung der barometrischen Höhe und ein Temperatursensor verwendet. Derartige Sonden sind beispielsweise in Form eines Pitotrohrs sowie als Prandtlsonde hinreichend aus der Luftfahrt bekannt, beispielsweise aus der DE 38 88 608 T2.

Aus der DE 28 42 414 A1 ist beispielsweise eine Differenzdrucksonde bekannt, bei dem quer zur Rohr-Längsachse des Sondenrohres Bohrungen zur Aufnahme sowohl des dynamischen Strömungsdruckes als auch des statischen Strömungsdruckes angeordnet sind.

Bei Gleitfallschirmsystemen, bei denen eine Last über ein Gurtzeug an einem Schirm bzw. Gleitschirm als aerodynamischen Körper angehängt ist, ist die Ermittlung von flugspezifischen Luftdruckdaten deutlich schwieriger. So ist es beispielsweise bekannt, entsprechende Luftdrucksonden, wie beispielsweise ein Pitotrohr, direkt an der Last, insbesondere ausfahrbar, anzuordnen, um dort die gewünschten Luftdruckdaten ermitteln zu können. Hierbei besteht jedoch der große Nachteil darin, dass aufgrund des aerodynamischen Wirkens der angehängten Last und die Ermittlung der Luftdruckdaten in unmittelbarer Umgebung der angehängten Last die ermittelten Luftdruckdaten derart stark verfälscht werden, dass sie den tatsächlichen Flugzustand nicht mehr widerspiegeln. Außerdem vollzieht die angehängte Last meist eine Eigenbewegung, so dass hierdurch die Messergebnisse verfälscht werden. Es hat sich des Weiteren als nachteilig herausgestellt, dass derartige an den Lasten angeordneten Sonden sowohl beim Abwurf und Öffnen des Gleitschirms als auch bei der Landung meist zerstört werden.

Hierneben ist es bekannt, eine derartige Pitot-Sonde in den Schirm einzunähen, um so die gewünschten Luftdruckdaten direkt am aerodynamischen Körper des Gleitfallschirmsystems ermitteln zu können. Allerdings wird auch hier meist das Messergebnis verfälscht, da sich die Sonde in der Regel im Bereich der Einlauflippe des Schirms befindet. Um eine gute Genauigkeit zu erzielen, kann darüber hinaus die Sonde im Windkanal kalibriert werden, was aufgrund des integralen Bestandteils der Sonde im Schirm sehr aufwendig ist. Darüber hinaus besteht auch hier die Gefahr, dass die Sonde beim Öffnen oder bei der Landung beschädigt wird.

Ähnliche Nachteile ergeben sich im Übrigen auch bei der Verwendung von sogenannten Schleppsonden, bei denen darüber hinaus die Messung sehr weit weg vom Schirm erfolgt und derartige Sonden eine sehr starke Eigenbewegung aufweisen, welche das Messergebnis verfälschen. Darüber hinaus können auch hier weder Anstell- noch Schiebewinkelmessungen durchgeführt werden. Aus der GB 2 032 860 A ist ein automatisches Fallschirmöffnungssystem bekannt, bei dem mithilfe eines Luftdruckschalters in Abhängigkeit einer hohen Luftdruckveränderung der Fallschirm automatisch geöffnet wird.

Ein ähnliches System ist auch aus der US 2,676,655 bekannt, bei dem mithilfe eines Luftdruckschalters das automatische Öffnen eines Fallschirms ausgelöst wird.

Aus der EP 2,527,251 A2 ist ein Überwachungssystem für den Lastabwurf bekannt, bei dem mithilfe eines an der Last angeordneten Messsystems Daten erfasst und an einen Kontroller weitergeleitet werden können.

Aus der US 2009/026319 A1 ist schließlich ein automatisches, autark arbeitendes Fallschirmsteuersystem bekannt, bei dem der Fallschirmflug mithilfe von Steuerleinen automatisch gesteuert werden kann. Dabei werden vor dem Flug Umgebungsdaten eingespielt, um einen genauen Flugweg des Fallschirmsystems zu berechnen.

Es ist daher Aufgabe der vorliegenden Erfindung eine verbesserte Luftdrucksonde anzugeben, die für Gleitfallschirmsysteme verwendet werden kann und hierbei sehr genaue Messergebnisse bezüglich der erfassten Luftdruckdaten erzielt.

Die Aufgabe wird mit der Luftdrucksonde gemäß Anspruch 1, dem Messsystem gemäß Anspruch 9 sowie dem Gleitfallschirmsystem gemäß Anspruch 11 erfindungsgemäß gelöst.

Gemäß Anspruch 1 wird eine Luftdrucksonde zum Erfassen von Luftdruckdaten einer die Luftdrucksonde umgebenden Luftströmung vorgeschlagen, wobei die Luftdrucksonde ein Gehäuse und mindestens einen in dem Gehäuse angeordneten Luftdrucksensor hat, der über eine Gehäuseöffnung in dem Gehäuse mit der die Luftdrucksonde umgebenden Luftströmung kommunizierend in Verbindung steht und zum Erfassen von Luftdruckdaten bezüglich der Luftströmung eingerichtet ist.

Erfindungsgemäß ist nun vorgesehen, dass die Luftdrucksonde eine Befestigungseinrichtung hat, die zum Befestigen der Luftdrucksonde an einem Gurtzeug eines Gleitfallschirmsystems ausgebildet ist.

Demnach erfolgt die Luftdatenmessung über eine Luftdrucksonde, die am Gurtzeug des Gleitfallschirmsystems montierbar ist, wodurch sich eine größere Nähe zum Schirm und somit zu dem aerodynamischen Auftriebskörper ergibt. Hierdurch ist die Messung in Bezug auf den aerodynamischen Auftriebskörper, nämlich dem Schirm, diesbezüglich wesentlich genauer. Darüber hinaus wird hier durch die Montage der Luftdrucksonde am Gurtzeug der Vorteil erreicht, dass der Abstand zum Strömungsfeld der strömungsungünstigen Last, welche die Messergebnisse stark verfälscht, vergrößert wird, so dass der Einfluss der strömungsungünstigen Last auf das Messergebnis der Luftdrucksonde minimiert oder gänzlich ausgeschlossen werden kann.

Darüber hinaus hat sich gezeigt, dass durch die Montage der Luftdrucksonde am Gurtzeug die Gefahr von Beschädigungen beim Abwurf der Last mit Gleitfallschirmsystem, beim Öffnen des Schirms sowie beim Landen deutlich verringert werden kann. Auch die kompakte Bauweise trägt hierzu bei.

Erfindungsgemäß weist das Gehäuse gegenüber der Befestigungseinrichtung eine vordere Gehäuseseite auf, die mindestens zwei winklig zueinander angeordnete Gehäuseflächen aufweist. Die vordere Gehäuseseite ist dabei in Strömungsrichtung bzw. Bewegungsrichtung der Luftdrucksonde ausgerichtet, was mit vordere Gehäuseseite gemeint ist. Von der vorderen Gehäuseseite bzw. den mindestens zwei winklig zueinander angeordneten Gehäuseflächen erstrecken sich dann jeweils seitliche Gehäuseseiten in Richtung der Befestigungseinrichtung, um das Gehäuse zu vervollständigen. Die vordere Gehäuseseite mit den mindestens zwei winkelig zueinander angeordneten Gehäuseflächen kann beispielsweise kugelförmig sein oder keilförmig ausgebildet sein.

In einer ersten Variante ist erfindungsgemäß vorgesehen, dass die zum Erfassen von statischen Luftdruckdaten vorgesehenen Gehäuseöffnungen in den seitlichen Gehäuseseiten angeordnet sind. Da an den seitlichen Gehäuseseiten bei Anströmung der Luftdrucksonden in der Regel keine Staudrücke entstehen, lässt sich hier der statische Luftdruck der umgebenden Luftströmung ohne dynamische Anteile erfassen. Hierfür hat die Luftdrucksonde mindestens einen statischen Luftdrucksensor, der über mindestens eine Gehäuseöffnung mit der die Luftdrucksonde umgebenden Luftströmung kommunizierend in Verbindung steht und so zum Erfassen von statischen Luftdruckdaten der Luftströmung eingerichtet ist. Der statische Luftdrucksensor ist dabei im Inneren des Gehäuses angeordnet und kann so über eine Öffnung in dem Gehäuse statische Luftdruckdaten der die Luftdrucksonde umgebenden Luftströmung erfassen. Die Gehäuseöffnung zum Erfassen von statischen Luftdruckdaten ist dabei in dem Gehäuse so vorgesehen, dass sie an einer seitlichen Gehäuseseite in Bezug auf die Bewegungsrichtung der Luftdrucksonde bzw. der Anströmrichtung der Luftdrucksonde angeordnet ist.

Des Weiteren ist in dieser Variante erfindungsgemäß vorgesehen, dass die Gehäuseöffnungen zum Erfassen von dynamischen Luftdruckdaten in der vorderen Gehäuseseite angeordnet sind, vorzugsweise rechtwinklig zu einer horizontalen Bezugsebene. Hiermit lässt sich der Staudruck direkt erfassen. Hierfür weist die Luftdrucksonde einen Gesamtluftdrucksensor auf, der über diese mindestens eine Gehäuseöffnung in der die Luftdrucksonde umgebenden Luftströmung kommunizierend in Verbindung steht und zum Erfassen von Gesamtluftdruckdaten über die kommunizierend verbundene Gehäuseöffnung eingerichtet ist. Gesamtluftdruckdaten setzen sich in der Regel zusammen aus dem statischen Druck einerseits und einem dynamischen Anteil (Staudruck als dynamischer Druck am Staupunkt) andererseits, der aus der Bewegung der Luftdrucksonde gegenüber der umgebenden Außenluft resultiert. Zur Ermittlung von Gesamtluftdruckdaten ist mindestens eine Gehäuseöffnung in der Luftdrucksonde so vorgesehen, dass sie in Richtung der primären Bewegungsrichtung bzw. Anströmrichtung ausgerichtet ist und so ähnlich einem Pitotrohr die umgebende Luftströmung direkt in die Gehäuseöffnung einströmt.

Mit Hilfe des statischen Luftdrucksensors und des Gesamtluftdrucksensors, die beide einfache Luftdrucksensoren sein können und je nach Anordnung der Gehäuseöffnung entweder den statischen Luftdruck oder den Gesamtluftdruck messen, können die für den Flugbetrieb eines Gleitfallschirmsystems notwendigen Flugleistungsparameter nahe des Gleitschirms ermittelt werden, was sehr genaue Messergebnisse produziert. Darüber hinaus ist es möglich, mit Hilfe derartiger aktuell erfasster Luftdruckdaten eine automatisierte Ansteuerung des Gleitfallschirmsystems zu bewirken.

Der statische Luftdrucksensor und der Gesamtluftdrucksensor bilden einen Differenzdrucksensor, der neben der Ermittlung des statischen Luftdrucks und des Gesamtluftdrucks auch zum Ermitteln eines Differenzdruckes zwischen dem statischen und dem Gesamtluftdruck ausgebildet ist, um so dynamische Luftdruckdaten bzw. den dynamischen Luftdruck zu berechnen. So ist es beispielsweise denkbar, dass die Gehäuseöffnung zur Ermittlung des statischen Luftdrucks an den ersten Eingang des Differenzdrucksensors und die Gehäuseöffnung zur Ermittlung des Gesamtluftdrucks an den zweiten Eingang des Differenzdrucksensors angebunden wird, so dass der Differenzdrucksensor zum Einen den statischen und den Gesamtluftdruck ermitteln kann und zum Anderen die Differenz zwischen dem statischen und dem Gesamtluftdruck erfasst, so dass hieraus beispielsweise der dynamische Anteil bzw. dynamische Luftdruck abgeleitet werden kann. Dabei gilt, vereinfacht, folgender Zusammenhang:

$$\text{Gesamtluftdruck} = \text{statischer Luftdruck} + \text{dynamischer Luftdruck}$$

oder

$$\text{dynamischer Luftdruck} = \text{Gesamtluftdruck} - \text{statischer Luftdruck}$$

Der Gesamtluftdruck setzt sich dabei, anders als der statische Luftdruck aus mindestens zwei Komponenten zusammen, nämlich zum einen aus dem statischen Luftdruck (ohne Staudruckanteil) einerseits und einem aus der Bewegung der Luftdrucksonde resultierenden Staudruck (dynamischer Anteil) andererseits.

Erfindungsgemäß ist eine Auswerteeinheit vorgesehen, die zum Ermitteln eine Anströmgeschwindigkeit der die Luftdrucksonde umgebenden Luftströmung in Abhängigkeit von dem ermittelten Differenzdruck eingerichtet ist. Denn aus der so ermittelten Differenz zwischen statischem und Gesamtluftdruck lässt sich der dynamische Anteil ableiten, der mit der anströmenden Geschwindigkeit korreliert.

Es wird somit möglich, die Anströmgeschwindigkeit bei einem Gleitfallschirmsystem nahe des Schirms bzw. des aerodynamischen Körpers zu ermitteln, ohne dass das Messergebnis aufgrund der aerodynamisch ungünstigen Last verfälscht wird. Vielmehr kann die Anströmgeschwindigkeit im Bereich des Gurtzeugs ermittelt werden, was, wie die Erfinder erkannt haben, sehr gute Messergebnisse liefert.

In einer alternativen oder zusätzlichen zweiten Variante sind erfindungsgemäß voneinander beabstandet vorgesehene Gehäuseöffnungen zur Ermittlung des Differenzdruckes für die Ermittlung des Anstellwinkels in jeweils einer der Gehäuseflächen der vorderen Gehäuseseite derart angeordnet, dass deren Öffnungsebenen winklig zueinander sind. Hierbei ist eine Gehäuseöffnung in der ersten Gehäusefläche angeordnet und die zweite Gehäuseöffnung in einer anderen, zweiten Gehäusefläche, die winklig zu der ersten Gehäusefläche ist, angeordnet. Hierdurch ergibt sich, dass die Öffnungsebenen der Gehäuseöffnungen winklig zueinander ausgerichtet sind, vorzugsweise in Strömungsrichtung, in Bezug auf eine horizontale Bezugsebene aber unter einem Winkel in Strömungsrichtung.

Hierfür weist die Luftdrucksonde einen Differenzdrucksensor auf, der über die mindestens zwei voneinander beabstandet vorgesehenen Gehäuseöffnungen, deren Öffnungsebenen in Strömungsrichtung bzw. Bewegungsrichtung angeordnet und winklig zueinander sind, mit der die Luftdrucksonde umgebenden Luftströmung kommunizierend in Verbindung steht und zum Ermitteln eines Differenzdruckes zwischen den über die jeweiligen Gehäuseöffnungen erfassten Luftdruckdaten ausgebildet ist, wobei eine Auswerteeinheit vorgesehen ist, die zum Ermitteln eines Anstellwinkels bezüglich der die Luftdrucksonde umgebende Luftströmung in Abhängigkeit von dem ermittelten Differenzdruck eingerichtet ist.

Aufgrund der Tatsache, dass die beiden Gehäuseöffnungen bezüglich ihren Öffnungsebenen winklig zueinander sind und darüber hinaus in Strömungsrichtung bzw. Bewegungsrichtung angeordnet sind, kann durch eine Differenzdruckmessung von an diesen Gehäuseöffnungen erfassten Luftdruckdaten der Anstellwinkel abgeleitet werden. Der Anstellwinkel umfasst dabei auch den Schiebewinkel. Befindet sich die Luftdrucksonde beispielsweise in Waage, so werden beide Gehäuseöffnungen unter einem definierten Winkel in Strömungsrichtung angeströmt. Verändert sich nun der Anstellwinkel gegenüber der Luftströmung, so wird eine der Gehäuseöffnungen stärker angeströmt, während die andere Gehäuseöffnung schwächer angeströmt wird. Mit anderen Worten, bei der einen Gehäuseöffnung nimmt der Gesamtluftdruck (bzw. der dynamische Anteil des Gesamtluftdruckes) zu, während bei der anderen Gehäuseöffnung der Gesamtluftdruck (bzw. der dynamische Anteil des Gesamtluftdruckes) abnimmt. Aus dieser Differenz lässt sich dann mit Hilfe einer Auswerteeinheit der Anstellwinkel ermitteln.

Die Befestigungseinrichtung der Luftdrucksonde kann beispielsweise derart ausgebildet sein, dass sich die Luftdrucksonde an einem flächigen, bandförmigen Gurtzeug eines Gleitfallschirmsystems befestigen kann. Das Gurtzeug eines Gleitfallschirmsystems im Sinne der vorliegenden Erfindung ist die lasttragende Verbindung zwischen dem Schirm als aerodynamischen Körper und der angehängten oder anzuhängenden Last. Das Gurtzeug wird dabei meist über die sogenannten Fangleinen mit dem Schirm verbunden.

Die Befestigungseinrichtung kann beispielsweise so ausgebildet sein, dass die Befestigungseinrichtung Rastnasen aufweist, mit denen die Luftdrucksonde an dem Gurtzeug klemmend gehalten wird. Vorzugsweise ist die Befestigungseinrichtung so ausgebildet, dass die Luftdrucksonde an dem Gurtzeug befestigt werden kann, ohne dass dabei das Gurtzeug beschädigt oder in seiner Ausbildung verändert werden muss.

In einer vorteilhaften Ausführungsform ist die Befestigungseinrichtung so ausgebildet, dass sie zum lösbaren Befestigen der Luftdrucksonde an dem Gurtzeug ausgebildet ist. Hierdurch wird es möglich, die Luftdrucksonde am Gurtzeug zu befestigen und nach dem Gebrauch wieder zu entfernen, ohne hierbei das Gurtzeug an die Befestigung der Luftdrucksonde anpassen zu müssen oder das Gurtzeug zu beschädigen.

Mittels einer weiteren vorteilhaften Ausführungsform weist die Befestigungseinrichtung einer an dem Gehäuse vorgesehene Gurtzeugaufnahme auf, die zur Aufnahme des Gurtzeuges in oder an dem Gehäuse und zum Befestigen der Luftdrucksonde an dem aufgenommenen Gurtzeug ausgebildet ist. Die Gurtzeugaufnahme kann beispielsweise ein an dem Gehäuse oder in dem Gehäuse vorgesehener Schacht sein, dessen Abmessungen mit den Abmessungen des aufzunehmenden Gurtzeuges im Wesentlichen übereinstimmen, so dass das Gurtzeug in die Gurtzeugaufnahme des Gehäuses der Luftdrucksonde eingeführt und dort zum Befestigen gehalten werden kann.

Gemäß einer weiteren vorteilhaften Ausführungsform ist die Befestigungseinrichtung so ausgebildet, dass sie zum Befestigen der Luftdrucksonde an dem Gurtzeug mittels einer form- und/oder kraftschlüssigen Verbindung ausgebildet ist.

Gemäß einer vorteilhaften Ausführungsform weist das Gehäuse der Luftdrucksonde mindestens zwei Gehäuseteile auf, zwischen denen die Befestigungseinrichtung gebildet wird, sodass das Gurtzeug zwischen den beiden Gehäuseteilen durchführbar ist

Gemäß einer vorteilhaften Ausführungsform wird die Luftdrucksonde klemmend an dem Gurtzeug gehalten, bspw. Wenn im zusammengesetzten Zustand der beiden Gehäuseteile das Gurtzeug zwischen den beiden Gehäuseteilen durchgeführt ist. Hierfür sind die Gehäuseteile an ihren Fügeseiten, an denen die beiden Gehäuseteile zu dem Gesamtgehäuse der Luftdrucksonde zusammengesetzt werden können, so ausgebildet, dass das Gurtzeug zwischen den beiden Gehäuseteilen durchführbar ist. Werden die beiden Gehäuseteile mit dem dazwischen liegenden Gurtzeug zusammengefügt bzw. zusammengesetzt, so wird das Gurtzeug zwischen den beiden Gehäuseteilen eingeklemmt, so dass die Luftdrucksonde an dem Gurtzeug klemmend gehalten wird.

Hierfür kann beispielsweise eines der Gehäuseteile oder auch beide Gehäuseteile an ihren Fügeseiten so ausgebildet sein, dass eine Ausnehmung in dem Gehäuse vorgesehen ist, in dass das Gurtzeug aufgenommen werden kann. Die Ausnehmung kann beispielsweise eine Tiefe aufweisen, die kleiner ist als die Tiefe des Gurtzeugs, so dass die Luftdrucksonde im zusammengesetzten Zustand der beiden Gehäuseteile klemmend an dem Gurtzeug gehalten wird.

Es ist ganz besonders vorteilhaft, wenn in dem ersten Gehäuseteil der oder die Luftdrucksensoren zur Ermittlung der Luftdruckdaten angeordnet sind, während in dem zweiten Gehäuseteil ein Akkumulator vorgesehen ist, um die Sensoren und anderen technischen Einrichtungen in dem ersten Gehäuseteil mit elektrischer Energie zu versorgen.

Gemäß einer vorteilhaften Ausführungsform ist die Befestigungseinrichtung so ausgebildet, dass die Luftdrucksonde an dem Gurtzeug vernähbar ist, so dass die Luftdrucksonde fest mit dem Gurtzeug verbunden bzw. vernäht werden kann. Hierzu weist die Befestigungseinrichtung bspw. Durchführungen auf, durch die ein Nähfaden geführt werden kann, der dann durch das Gurtzeug geführt wird, um so die Luftdrucksonde mit dem Gurtzeug zu vernähen.

Gemäß einer vorteilhaften Ausführungsform hierzu weist die Luftdrucksonde mindestens zwei Gehäuseteile auf, wobei die Befestigungseinrichtung eines der Gehäuseteile (bspw. das erste Gehäuseteil) so ausgebildet ist, dass das Gehäuseteil mit dem Gurtzeug zumindest vernähbar ist, während das andere Gehäuseteil (bspw. das zweite Gehäuseteil) so ausgebildet ist, dass es an dem mit dem Gurtzeug vernähten Gehäuseteil befestigbar ist, bspw. rastend, klemmend und/oder verschraubend.

Gemäß einer vorteilhaften Ausführungsform kann die Befestigungseinrichtung auch eine an dem Gurtzeug anordbare Tasche sein, in die die Luftdrucksonde einsteckbar ist.

Mit Hilfe der vorliegenden Erfindung wird es somit möglich, Flugleistungsparameter von flexiblen Fluggeräten, wie beispielsweise Gleitfallschirmsystemen, zu ermitteln, ohne dass die Gefahr besteht, dass die Sensoren beschädigt werden oder das Messergebnis aufgrund einer ungünstigen Positionierung der Sensoren verfälscht wird. Hierbei ist es beispielsweise denkbar, dass mehrere Luftdrucksonden an dem Gurtzeug angeordnet werden, so dass eine Art Sensornetzwerk gebildet werden kann.

Vorteilhafterweise bilden die Winkel zueinander angeordneten Gehäuseflächen der vorderen Gehäuseseite eine keilförmige, kugelförmige oder runde vordere Gehäuseseite. Bei einer kugelförmigen oder runden vorderen Gehäuseseite sind per Definition eine Vielzahl von Gehäuseflächen unter einem Winkel angeordnet, so dass sich eine Rundung ergibt. Bei einer kugelförmigen oder eliptischen vorderen Gehäuseseite entspricht dies unendlich vielen unter einem Winkel angeordneten Gehäuseflächen.

Gemäß einer weiteren vorteilhaften Ausführungsform weist die Luftdrucksonde weiterhin mindestens einen Bewegungs- und/oder Beschleunigungssensor zum Erfassen von Bewegungs- und/oder Beschleunigungsdaten der Luftdrucksonde (bspw. Drehrate, Beschleunigung, Drehratenbeschleunigung), einen Magnetometer zum Erfassen von Magnetfelddaten (bspw. Erdmagnetfeld zum Erfassen des Kurwinkels der Sonde), insbesondere des Erdmagnetfeldes, und/oder einen Temperatursensor zum Erfassen von Temperaturdaten auf. Derartige weitergehende Daten können dann beispielsweise für Kalibrierungsmaßnahmen oder zur genaueren Bestimmung von Anströmgeschwindigkeiten oder Anstellwinkel aus den Luftdruckdaten herangezogen werden und erweitern somit das Spektrum der erfassbaren Flugleistungsparametern, die beispielsweise auch für einen automatisierten Flug eine wichtige Rolle spielen.

Gemäß einer weiteren vorteilhaften Ausführungsform weist die Luftdrucksonde eine Funkübertragungseinheit auf, die zum drahtlosen Übertragen von durch die Luftdrucksonde erfassten Daten an eine Empfangsstation ausgebildet ist. Die erfassten Daten können beispielsweise die erfassten Luftdruckdaten, wie beispielsweise statische oder dynamische Luftdruckdaten, die daraus abgeleiteten Informationen, wie beispielsweise Anströmgeschwindigkeit oder Anstellwinkel aber auch die weiteren Daten, wie beispielsweise Bewegungs- und/oder Beschleunigungsdaten, Magnetfelddaten oder Temperaturdaten sein. Mit Hilfe der Übertragungseinheit können somit die Rohdaten, d.h. die rein erfassten Luftdruckdaten bzw. Differenzdruckdaten sein aber auch die daraus abgeleiteten Daten. Im zweiten Fall befindet sich in der Luftdrucksonde eine entsprechende Mikroprozessor gesteuerte Auswerteeinheit.

Im Übrigen wird die Aufgabe auch mit einem Messsystem für Gleitfallschirmsysteme gemäß Anspruch 9 erfindungsgemäß gelöst, wobei das Messsystem mindestens eine Luftdrucksonde wie vorstehend beschrieben aufweist und eine Verarbeitungseinheit hat, die an einer an das Gleitfallschirmsystem angehängten Last befestigbar ist und eine Empfangseinheit zum Empfang der von der oder dem Luftdrucksonden erfassten und übertragenden Daten aufweist. Hierdurch können die von der oder den Luftdrucksonden stammenden Daten an die Verarbeitungseinheit übertragen werden, wo sie dann zur Ermittlung der Flugleistungsparameter des Gleitfallschirmsystems verwendet werden können.

Erfindungsgemäß weist die Verarbeitungseinheit des Messsystems wenigstens einen Bewegungs- und/oder Beschleunigungssensor zum Erfassen von Bewegungs- und/oder Beschleunigungsdaten der angehängten Last auf, wenn die Verarbeitungseinheit an der Last angeordnet ist. So ist es beispielsweise denkbar, dass ein Inertialbewegungssensorsystem vorgesehen ist, das einen Dreiachs-Beschleunigungssensor und einen Dreiachs-Winkelgeschwindigkeitssensor aufweist. Hierdurch lässt sich die Bewegung der angehängten Lasten erfassen.

Des Weiteren kann der Verarbeitungseinheit ein Magnetometer zum Erfassen von Magnetfelddaten vorgesehen sein, wobei das Magnetometer beispielsweise ein Dreiachs-Magnetometer sein kann.

Darüber hinaus ist vorteilhafterweise eine Kamera zum Aufnehmen von den Schirmen des Gleitfallschirmsystems enthaltenen Bilddaten vorgesehen, wenn die Verarbeitungseinheit eine Last angeordnet ist, wobei die Verarbeitungseinheit zum Ermitteln einer relativen Bewegung zwischen Schirm und Last in Abhängigkeit für den aufkommenden Bilddaten ausgebildet ist. Diese Bewegung zwischen Last und Schirm kann beispielsweise als aktuelle Flugparametereingang in die Datenbasis finden. Denkbar ist allerdings auch, dass auf Basis der relativen Bewegung zwischen Schirm und Last eine Korrektur der Luftdruckdaten erfolgt, die von der Luftdrucksonde am Gurtzeug erfasst werden, um so die Störparameter der relativen Bewegung zwischen Schirm und Last auszugleichen. Eine derartige Korrektur kann beispielsweise auch auf Basis der Bewegungs- und/oder Beschleunigungsdaten, die von der angehängten Last oder der Luftdrucksonde erfasst werden, erfolgen.

Des Weiteren ist vorteilhafterweise eine Position zur Ermittlungseinheit zum Ermitteln der aktuellen Position der Last, wenn die Verarbeitungseinheit an der Last angeordnet ist, vorgesehen. Denkbar ist auch, dass eine Höhenermittlungseinheit zum Ermitteln der barometrischen Höhe der Last vorgesehen ist, wenn die Verarbeitungseinheit an der Last angeordnet ist.

Darüber hinaus wird die Aufgabe auch mit einem Gleitfallschirmsystem mit einem Schirm, einer über ein Gurtzeug an dem Schirm angehängten Last und einer an dem Gurtzeug angeordneten Luftdrucksonde wie vorstehend beschrieben, gelöst. Gemäß einer vorteilhaften Ausführungsform kann an dem Gleitfallschirmsystem ein Messsystem vorgesehen sein, bei dem die Verarbeitungseinheit an der angehängten Last angeordnet ist.

Die Erfindung wird anhand der beigefügten Figuren beispielhaft erläutert. Es zeigen:

Figur 1    schematische Darstellung eines Gleitfallschirmsystems mit angehängter Last;
Figur 2    schematische Darstellung der erfindungsgemäßen Luftdrucksonde.

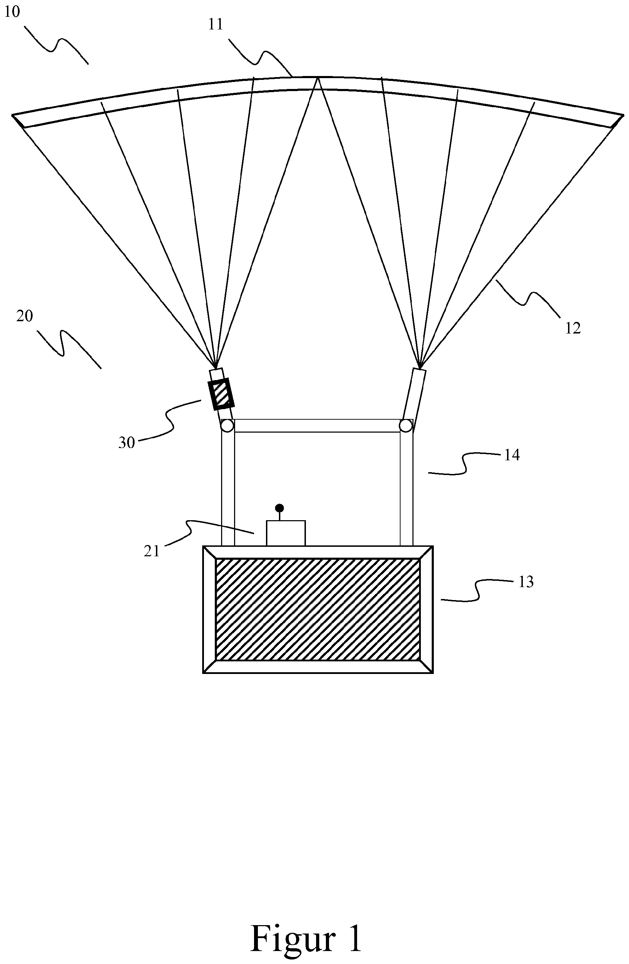

Figur 1 zeigt schematisch ein Gleitfallschirmsystem 10, das einen Schirm bzw. Gleitschirm 11 als aerodynamischen Strömungskörper hat. An dem Gleitschirm 11 sind eine Mehrzahl von Fangleinen 12 angeordnet, welche den Gleitschirm 11 mit einer angehängten Last 13 über ein dazwischen vorgesehenes Gurtzeug 14 verbinden. Im Ausführungsbeispiel der Figur 1 ist das Gurtzeug 14 die lastübertragende Verbindung zwischen der angehängten Last 13 und den Fangleinen 12 des Gleitschirmes 11.

Erfindungsgemäß ist nun ein Messsystem 20 vorgesehen, das eine an dem Gurtzeug 14 des Gleitfallschirmsystems 10 angeordnete Luftdrucksonde 30 und einem mit der Luftdrucksonde 30 über eine Funkverbindung kommunizierend verbundene Verarbeitungseinheit 21 hat. Die Verarbeitungseinheit 21 ist dabei an oder in der Last 13 angeordnet und empfängt die von der Luftdrucksonde 30 erfassten und übertragenden Luftdruckdaten bzw. daraus abgeleitete Daten. Hieraus lassen sich denn in der Gesamtheit die Flugleistungsparameter des Gleitfallschirmsystems 10 während des Fluges ermitteln, so dass beispielsweise auch eine automatisierte Steuerung des Gleitfallschirmsystems während des Fluges in Abhängigkeit von den Flugleistungsparametern möglich ist. Denkbar ist des Weiteren, dass mehrere Luftdrucksonden 30 an dem Gurtzeug 14 angeordnet sind, die zusammen ein Sensornetzwerk bilden.

Wie in Figur 1 erkennbar, ist die Luftdrucksonde 30 somit nicht mehr in unmittelbarer Nähe der strömungsungünstigen Last 13 angeordnet, was zu verfälschten Messergebnissen führen würde. Vielmehr ist die Luftdrucksonde 30 nunmehr in der Nähe des Gleitschirms 11 angeordnet, ohne jedoch Bestandteil des Gleitschirmes 11 zu sein, was die Ausgestaltung der Luftdrucksonde 30 und des Gleitschirmes 11 vereinfacht. Darüber hinaus muss der Gleitschirm 11 nicht besonders hergerichtet sein, um entsprechende Luftdruckdaten aufnehmen zu können, wie dies beispielsweise bei eingenähtem Pitotrohr in dem Gleitschirm 11 der Fall ist.

Die Verarbeitungseinheit 21 kann beispielsweise Bewegungs- und Beschleunigungssensoren in den drei rotatorischen und drei translatorischen Bewegungsachsen aufweisen, um entsprechenden Bewegungs- und/oder Beschleunigungsdaten der angehängten Last 13 zu erfassen. Denkbar ist auch, dass ein Magnetometer zum Erfassen des Erdmagnetfeldes in der Verarbeitungseinheit 21 vorgesehen ist.

Darüber hinaus ist es denkbar, dass die Verarbeitungseinheit 21 eine Kamera hat, die in Richtung des Gleitschirms 11 ausgerichtet ist und zum Aufnehmen von dem Gleitschirm 11 des Gleitfallschirmsystems 10 enthaltenen Bilddaten vorgesehen ist. Die Verarbeitungseinheit 21 ist dann ausgebildet, eine relative Bewegung zwischen dem Gleitschirm 11 und der angehängten Last 13 aus den aufgenommenen Bilddaten zu ermitteln, wodurch beispielsweise von der Luftdrucksonde 30 gemessene und an die Verarbeitungseinheit 21 übertragene Luftdruckdaten entsprechend dieser Bewegungen korrigiert werden können. Die Korrektur kann beispielsweise anhand von im Windkanal ermittelten Kennlinien erfolgen.

Die vorliegende Erfindung offenbart somit die Verwendung einer Luftdrucksonde 30 an dem Gurtzeug 14 eines Gleitfallschirmsystems 10 zur Ermittlung von Luftdruckdaten.

Die Aktivierung der Luftdrucksonde 30 kann beispielsweise mittels eines Ripcord-Switches erfolgen, so dass die Luftdrucksonde 30 erst dann zur Übertragung von Daten aktiviert wird, wenn das Gleitfallschirmsystem 10 mit angehängter Last 13 abgeworfen wurde. Beim Ausbreiten des Gleitschirms 11 wird dabei die Sonde 30 aktiviert und sendet dann die entsprechenden erfassten Luftdruckdaten oder abgeleitete Daten hiervon.

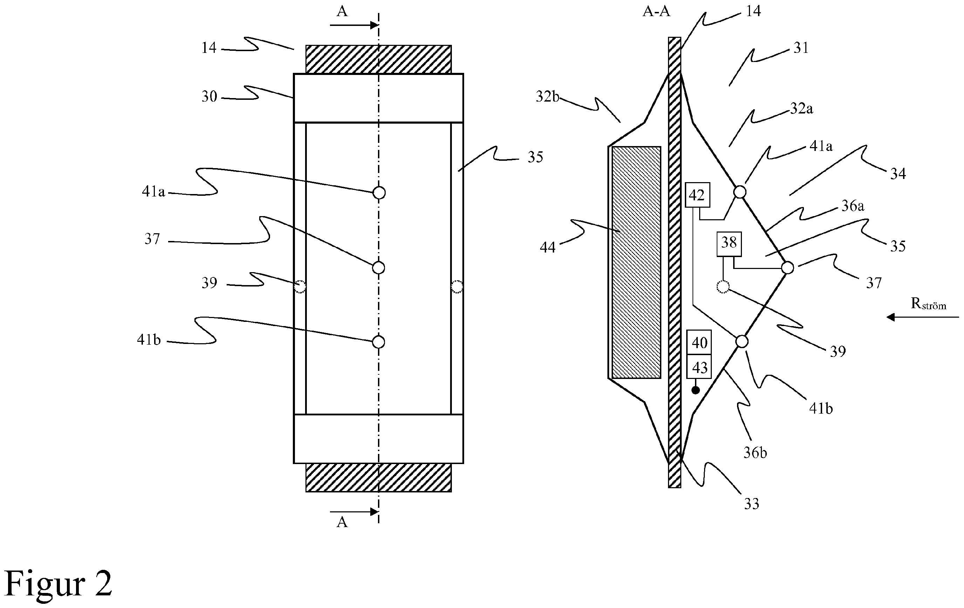

Figur 2 zeigt schematisch den Aufbau der erfindungsgemäßen Luftdrucksonde 30. Im linken Teil der Figur 1 ist eine Draufsicht auf die Luftdrucksonde 30 gezeigt, während im rechten Teil der Figur 2 die Luftdrucksonde 30 in einer Schnittdarstellung im Bereich A-A dargestellt ist.

Die Luftdrucksonde 30 weist ein Gehäuse 31 auf, das im Ausführungsbeispiel der Figur 2 aus zwei Gehäuseteilen 32a und 32b besteht. Im ersten Gehäuseteil 32a ist die Sensorik sowie ggf. die Übertragungs- und Auswertetechnik eingebaut, während im zweiten Gehäuseteil 32b ein Akkumulator 44 zur Energieversorgung vorgesehen ist.

Zwischen den beiden Gehäuseteilen 32a und 32b ist die erfindungsgemäße Befestigungseinrichtung 33 vorgesehen, um die Luftdrucksonde 30 an dem Gurtzeug 14 befestigen zu können. Hierfür ist das Gehäuse 31 an den Fügeseiten der beiden Gehäuseteilen 32a und 32b so ausgebildet, dass das flächige, bandförmige Gurtzeug 14 in der Befestigungseinrichtung 33 aufgenommen werden kann und durch Zusammensetzen der beiden Gehäuseteile 32a und 32b die Luftdrucksonde klemmend an dem Gurtzeug 14 gehalten wird. Denkbar ist auch, dass die Luftdrucksonde mit der Befestigungseinrichtung 33 mit dem Gurtzeug vernäht wird. Zwischen den Gehäuseteilen 32a und 32b wird somit eine Gurtzeugaufnahme der Befestigungseinrichtung 33 gebildet, um die Luftdrucksonde 30 klemmend und/oder vernähend an dem Gurtzeug 14 befestigen zu können.

Das erste Gehäuseteil 32a des Gehäuses 31 der Luftdrucksonde 30 weist eine vordere Gehäuseseite 34 auf, die vorgesehen ist, in Strömungsrichtung $R_{ström}$ einer Luftströmung ausgerichtet zu werden. An die vordere Gehäuseseite 34 schließen sich seitlich die jeweils seitlichen Gehäuseseiten 35 an, die sich in Richtung der Befestigungseinrichtung 33 erstrecken. Die vordere Gehäuseseite 34 weist zwei winklig zueinander angeordnete Gehäuseflächen 36a und 36b auf, die zusammen die vordere Gehäuseseite 34 bilden und aufgrund der winkligen Anordnung eine keilförmige vordere Gehäuseseite 34 schaffen.

Im Ausführungsbeispiel der Figur 2 ist in der Keilspitze, d.h. in dem Bereich, wo die erste Gehäusefläche 36a mit der zweiten Gehäusefläche 36b winklig verbunden ist, eine Gehäuseöffnung 37 für den Gesamtluftdruck vorgesehen, die mit dem Eingang eines ersten Differenzdrucksensors 38 verbunden ist. Durch Anströmung der Luftdrucksonde 30, gekennzeichnet durch den Pfeil $R_{ström}$, wird der Differenzdrucksensor 38 direkt angeströmt und kann beispielsweise den Gesamtluftdruck bzw. Gesamtluftdruckdaten ermitteln.

Der erste Differenzdrucksensor 38 ist darüber hinaus über seinen zweiten Eingang mit einer Gehäuseöffnung 39 zur Ermittlung des statischen Druckes verbunden, wobei die Gehäuseöffnung 39 zur Ermittlung des statischen Luftdrucks (abhängig von der Höhe und der Temperatur) in einem der seitlichen Gehäuseseiten 35 angeordnet ist. Die Gehäuseöffnung 39 wird somit nicht direkt angeströmt, so dass sich ein statischer Luftdruck ohne dynamischer Anteile ermitteln lässt.

Der erste Differenzdrucksensor 38 kann nun aus dem erfassten Gesamtluftdruck über die Gehäuseöffnung 37 und dem statischen Druck über die Gehäuseöffnung 39 den dynamischen Anteil bzw. dynamischen Luftdruck der Luftströmung $R_{ström}$ ermitteln, so dass sich die anströmende Geschwindigkeit ermitteln lässt. Dies kann beispielsweise mit Hilfe einer mit dem ersten Differenzdrucksensor 38 verbundenen Auswerteeinheit 40 erfolgen.

Des Weiteren sind zwei weitere Gehäuseöffnungen 41a und 41b vorgesehen, die zur Ermittlung eines Anstellwinkels anhand von Gesamtluftdruckdaten ausgebildet sind. Die Gehäuseöffnung 41a ist dabei in der ersten Gehäusefläche 36a der vorderen Gehäuseseite 34 angeordnet, während die zweite Gehäuseöffnung 41b in der zweiten Gehäusefläche 36b der vorderen Gehäuseseite 34 angeordnet ist. Aufgrund der Tatsache, dass die erste Gehäusefläche 36a winklig zu der zweiten Gehäusefläche 36b angeordnet ist, sind die Öffnungsebenen der Gehäuseöffnungen 41a und 41b ebenfalls winklig zueinander, so dass je nach Anstellwinkel, umfassend auch den Schiebewinkel, der Luftdrucksonde 30 gegenüber der Luftströmung $R_{ström}$ unterschiedliche dynamische Anteile der Luftströmung gemessen werden können.

Die Öffnungsebenen der Gehäuseöffnungen 41a und 41b für die Anstellwinkelmessung sind dabei auch winklig bzw. verschieden von der Öffnungsebene der Gehäuseöffnung 37 für den Staudruck.

Im Ausführungsbeispiel der Figur 2 sind die beiden Gehäuseöffnungen 41a und 41b für die Anstellwinkelmessung mit einem zweiten Differenzdrucksensor 42 verbunden, so dass die Differenz zwischen den Luftdruckdaten gemessen in Bezug auf die erste Gehäuseöffnung 41a und die zweite Gehäuseöffnung 41b erfasst wird. Die Auswerteeinheit 40 kann dann in Abhängigkeit der ermittelten Differenz zwischen den an den Gehäuseöffnungen 41a und 41b erfassten Luftdruckdaten den Anstellwinkel der Luftdrucksonde 30 in Bezug auf die Luftströmung $R_{ström}$ berechnen.

Die Auswerteeinheit 40 ist des Weiteren mit einer Übertragungseinheit 43 verbunden, die zum Übertragen der erfassten Luftdruckdaten und/oder der abgeleiteten Flugparameter wie anströmende Geschwindigkeit oder Anstellwinkel an einer Empfangsstation ausgebildet ist. Die Empfangsstation kann beispielsweise die Verarbeitungseinheit 21 des Messsystems 20 sein (vgl. Figur 1).

Durch die keilförmige vordere Gehäuseseite 34 kann somit mit Hilfe der Luftdrucksonde 30 sowohl die Anströmgeschwindigkeit in Bezug auf die Luftströmung $R_{ström}$ als auch der Anstellwinkel in Bezug auf die Luftströmung $R_{ström}$ ermittelt werden, wobei die Luftdrucksonde 30 dennoch eine kompakte Bauweise aufweist, die eine Anordnung der Sonde an einem Gurtzeug eines Gleitfallschirmsystems ermöglicht.

Bezugszeichenliste:

| 10 | Gleitfallschirmsystem |
|---|---|
| 11 | Gleitschirm |
| 12 | Fangleinen |
| 13 | Last |
| 14 | Gurtzeug |
| 20 | Messsystem |
| 21 | Verarbeitungseinheit |
| 30 | Luftdrucksonde |
| 31 | Gehäuse |
| 32a | erstes Gehäuseteil (vorderes) |
| 32b | zweites Gehäuseteil (hinteres) |
| 33 | Befestigungseinrichtung |
| 34 | vordere Gehäuseseite |
| 35 | seitliche Gehäuseseiten |
| 36a | erste Gehäusefläche der vorderen Gehäuseseite |
| 36b | zweite Gehäusefläche der vorderen Gehäuseseite |
| 37 | Gehäuseöffnung für den Gesamtluftdruck |
| 38 | erster Differenzdrucksensor |
| 39 | Gehäuseöffnung für statischen Luftdruck |
| 40 | Auswerteeinheit |
| 41a, 41b | Gehäuseöffnungen für Anstellwinkelmessung |
| 42 | zweiter Differenzdrucksensor |
| 43 | Übertragungseinheit |

**Patentansprüche**

1. Luftdrucksonde (30) zum Erfassen von Luftdruckdaten einer die Luftdrucksonde (30) umgebenden Luftströmung ($R_{ström}$), wobei die Luftdrucksonde (30) aufweist:

- ein Gehäuse (31),
- mindestens einen Luftdrucksensor (38, 42), der über eine Gehäuseöffnung (37, 39, 41a, 41b) in dem Gehäuse (31) mit der die Luftdrucksonde (30) umgebenden Luftströmung ($R_{ström}$),kommunizierend in Verbindung steht und zum Erfassen von Luftdruckdaten bzgl. der Luftströmung eingerichtet ist,
- eine Befestigungseinrichtung (33), die zum Befestigen der Luftdrucksonde (30) an einem Gurtzeug (14) eines Gleitfallschirmsystems (10) ausgebildet ist,

**dadurch gekennzeichnet, dass** das Gehäuse gegenüber der Befestigungseinrichtung (33) eine vordere Gehäuseseite (34) hat, die mindestens zwei winklig zueinander angeordnete Gehäuseflächen (36a, 36b) aufweist, von denen sich jeweils seitliche Gehäuseseiten (35) in Richtung der Befestigungseinrichtung (33) erstrecken, wobei

- mindestens eine erste Gehäuseöffnung (39) zum Erfassen von statischen Luftdruckdaten in einer der seitlichen Gehäuseseiten (35) angeordnet ist, wobei die Luftdrucksonde (30) mindestens einen statischen Luftdrucksensor (38) hat, der über die mindestens eine erste Gehäuseöffnung (39) mit der die Luftdrucksonde (30) umgebenden Luftströmung ($R_{ström}$) kommunizierend in Verbindung steht und zum Erfassen von statischen Luftdruckdaten über die kommunizierend verbundene erste Gehäuseöffnung (39) eingerichtet ist und mindestens eine zweite Gehäuseöffnung (37) zum Erfassen von Gesamtluftdruckdaten in der vorderen Gehäuseseite (34) angeordnet ist, wobei die Luftdrucksonde mindestens einen Gesamtluftdrucksensor (38) hat, der über die mindestens eine zweite Gehäuseöffnung (37) mit der die Luftdrucksonde (30) umgebenden Luftströmung ($R_{ström}$) kommunizierend in Verbindung steht und zum Erfassen von Gesamtluftdruckdaten über die kommunizierend verbundene zweite Gehäuseöffnung (37) eingerichtet ist, und wobei der mindestens eine statische Luftdrucksensor und der mindestens eine Gesamtluftdrucksensor einen Differenzdrucksensor (38) bilden, der zum Ermitteln eines dynamischen Luftdruckes als Differenzdruck zwischen den statischen Luftdruckdaten und den Gesamtluftdruckdaten ausgebildet ist, und eine Auswerteeinheit (40) vorgesehen ist, die zum Ermitteln einer Anströmgeschwindigkeit der die Luftdrucksonde (30) umgebenden Luftströmung in Abhängigkeit von dem dynamischen Luftdruckes eingerichtet ist, und/oder

- mindestens zwei voneinander beabstandet vorgesehene Gehäuseöffnungen (41a, 41b) zur Ermittlung des Differenzdruckes für die Ermittlung des Anstellwinkels in jeweils einer der Gehäuseflächen (36a, 36b) der vorderen Gehäuseseite (34) derart angeordnet sind, dass deren Öffnungsebenen winklig zueinander sind, wobei die Luftdrucksonde einen Differenzdrucksensor (42) hat, der über die mindestens zwei voneinander beabstandet vorgesehenen Gehäuseöffnungen (41a, 41b), deren Öffnungsebenen winklig zueinander sind, mit der die Luftdrucksonde (30) umgebenden Luftströmung ($R_{ström}$) kommunizierend in Verbindung steht und zum Ermitteln eines Differenzdruckes zwischen den über die jeweiligen Gehäuseöffnungen (41a, 41b) erfassten Luftdruckdaten ausgebildet ist, wobei eine Auswerteeinheit (40) vorgesehen ist, die zum Ermitteln eines Anstellwinkels bezüglich der die Luftdrucksonde (30) umgebenden Luftströmung ($R_{ström}$) in Abhängigkeit von dem ermittelten Differenzdruck eingerichtet ist.

2. Luftdrucksonde (30) nach Anspruch 1, **dadurch gekennzeichnet, dass** die Befestigungseinrichtung (33) zum lösbaren Befestigen der Luftdrucksonde (30) an dem Gurtzeug (14) ausgebildet ist.

3. Luftdrucksonde (30) nach Anspruch 1 oder 2, **dadurch gekennzeichnet, dass** die Befestigungseinrichtung (33) eine an dem Gehäuse (31) vorgesehene Gurtzeugaufnahme hat, die zur Aufnahme des Gurtzeugs (14) in oder an dem Gehäuse (31) und zum Befestigen der Luftdrucksonde (30) an dem aufgenommenen Gurtzeug (14) ausgebildet ist.

4. Luftdrucksonde (30) nach einem der vorhergehenden Ansprüche, **dadurch gekennzeichnet, dass** die Luftdrucksonde (30) mindestens zwei Gehäuseteile (32a, 32b) hat, zwischen denen die Befestigungseinrichtung (33) gebildet wird, sodass das Gurtzeug (14) zwischen den beiden Gehäuseteilen (32a, 32b) durchführbar ist.

5. Luftdrucksonde (30) nach einem der vorhergehenden Ansprüche, **dadurch gekennzeichnet, dass** die Befestigungseinrichtung (33) derart ausgebildet ist, dass die Luftdrucksonde (30) an dem Gurtzeug klemmend gehalten wird und/oder dass die Luftdrucksonde (30) an dem Gurtzeug vernähbar ist.

6. Luftdrucksonde (30) nach einem der vorhergehenden Ansprüche, **dadurch gekennzeichnet, dass** die winklig zueinander angeordneten Gehäuseflächen (36a, 36b) eine keilförmige, kugelförmige oder runde vordere Gehäuseseite (34) bilden.

7. Luftdrucksonde (30) nach einem der vorhergehenden Ansprüche, **dadurch gekennzeichnet, dass** die Luftdrucksonde (30) weiterhin aufweist:

- einen Bewegungs- und/oder Beschleunigungssensor zum Erfassen von Bewegungs- und/oder Beschleunigungsdaten der Luftdrucksonde,
- einen Magnetometer zum Erfassen von Magnetfelddaten, und/oder
- ein Temperatursensor zum Erfassen von Temperaturdaten.

8. Luftdrucksonde (30) nach einem der vorhergehenden Ansprüche, **dadurch gekennzeichnet, dass** die Luftdrucksonde (30) weiterhin eine Funkübertragungseinheit (43) hat, die zum drahtlosen Übertragen von durch die Luftdrucksonde (30) erfassten Daten an eine Empfangsstation (21) ausgebildet ist.

9. Messsystem (20) für Gleitfallschirmsysteme (10) mit einer Luftdrucksonde (30) nach einem der vorhergehenden Ansprüche und einer Verarbeitungseinheit (21), die an einer an das Gleitfallschirmsystem (10) angehängten Last (13) befestigbar ist und eine Empfangseinheit zum Empfangen der von der Luftdrucksonde (30) erfassten und übertragenden Daten aufweist.

10. Messsystem (20) nach Anspruch 9, **dadurch gekennzeichnet, dass** die Verarbeitungseinheit (21) aufweist:

- mindestens einen Bewegungs- und/oder Beschleunigungssensor zum Erfassen von Bewegungs- und/oder Beschleunigungsdaten der angehängten Last (13), wenn die Verarbeitungseinheit an der Last angeordnet ist,
- einen Magnetometer zum Erfassen von Magnetfelddaten,
- eine Kamera zum Aufnehmen von den Schirm des Gleitfallschirmsystems (10) enthaltenen Bilddaten, wenn die Verarbeitungseinheit (21) an der Last (13) angeordnet ist, wobei die Verarbeitungseinheit (21) zum Ermitteln einer relativen Bewegung zwischen Schirm (11) und Last (13) in Abhängigkeit von den aufgenommenen Bilddaten ausgebildet ist,
- eine Positionsermittlungseinheit zum Ermitteln der aktuellen Position der Last, wenn die Verarbeitungseinheit an der Last angeordnet ist und/oder
- eine Höhenermittlungseinheit zum Ermitteln der barometrischen Höhe der Last, wenn die Verarbeitungseinheit an der Last angeordnet ist.

11. Gleitfallschirmsystem (10) mit einem Schirm (11), einer über ein Gurtzeug (14) an dem Schirm angehängten Last (13) und einer an dem Gurtzeug (14) angeordneten Luftdrucksonde (30) nach einem der Ansprüche 1 bis 8.

12. Gleitfallschirmsystem (10) nach Anspruch 11, **dadurch gekennzeichnet, dass** das Gleitfallschirmsystem (10) ein Messsystem (20) nach Anspruch 9 und 10 aufweist, wobei die Verarbeitungseinheit (21) an der angehängten Last angeordnet ist.

## Claims

1. Air pressure probe (30) for capturing air pressure data relating to an air flow ($R_{ström}$) surrounding the air pressure probe (30), wherein the air pressure probe (30) has:

- a housing (31),
- at least one air pressure sensor (38, 42) which is communicatively connected to the air flow ($R_{ström}$) surrounding the air pressure probe (30) via a housing opening (37, 39, 41a, 41b) in the housing (31) and is set up to capture air pressure data with respect to the air flow,
- a fastening device (33) which is designed to fasten the air pressure probe (30) to a harness (14) of a gliding parachute system (10),

**characterized in that** the housing has, opposite the fastening device (33), a front housing side (34) having at least two housing surfaces (36a, 36b) which are arranged at an angle with respect to one another and lateral housing sides (35) of which each extend in the direction of the fastening device (33), wherein

- at least one first housing opening (39) for capturing static air pressure data is arranged in one of the lateral housing sides (35), wherein the air pressure probe (30) has at least one static air pressure sensor (38) which is communicatively connected to the air flow ($R_{ström}$) surrounding the air pressure probe (30) via the at least one first housing opening (39) and is set up to capture static air pressure data via the communicatively connected first housing opening (39), and at least one second housing opening (37) for capturing overall air pressure data is arranged in the front housing side (34), wherein the air pressure probe has at least one overall air pressure sensor (38) which is communicatively connected to the air flow ($R_{ström}$) surrounding the air pressure probe (30) via the at least one second housing opening (37) and is set up to capture overall air pressure data via the communicatively connected second housing opening (37), and wherein the at least one static air pressure sensor and the at least one overall air pressure sensor form a differential pressure sensor (38) which is designed to determine a dynamic air pressure as a differential pressure between the static air pressure data and the overall air pressure data, and an evaluation unit (40) is provided and is set up to determine an incident flow velocity of the air flow surrounding the air pressure probe (30) on the basis of the dynamic air pressure, and/or

- at least two housing openings (41a, 41b) which are provided at a distance from one another and are intended to determine the differential pressure are arranged in one of the housing surfaces (36a, 36b) of the front housing side (34) in each case, for the purpose of determining the setting angle, in such a manner that their opening planes are at an angle with respect to one another, wherein the air pressure probe has a differential pressure sensor (42) which is communicatively connected to the air flow ($R_{ström}$) surrounding the air pressure probe (30) via the at least two housing openings (41a, 41b), which are provided at a distance from one another and the opening planes of which are at an angle with respect to one another, and is designed to determine a differential pressure between the air pressure data captured via the respective housing openings (41a, 41b), wherein an evaluation unit (40) is provided and is set up to determine a setting angle with respect to the air flow ($R_{ström}$) surrounding the air pressure probe (30) on the basis of the determined differential pressure.

2. Air pressure probe (30) according to Claim 1, **characterized in that** the fastening device (33) is designed to releasably fasten the air pressure probe (30) to the harness (14).

3. Air pressure probe (30) according to Claim 1 or 2, **characterized in that** the fastening device (33) has a harness receptacle which is provided on the housing (31) and is designed to accommodate the harness (14) in or on the housing (31) and to fasten the air pressure probe (30) to the harness (14) which has been accommodated.

4. Air pressure probe (30) according to one of the preceding claims, **characterized in that** the air pressure probe (30) has at least two housing parts (32a, 32b), between which the fastening device (33) is formed, with the result that the harness (14) can be passed through between the two housing parts (32a, 32b).

5. Air pressure probe (30) according to one of the preceding claims, **characterized in that** the fastening device (33) is designed in such a manner that the air pressure probe (30) is held on the harness with clamping, and/or **in that** the air pressure probe (30) can be stitched to the harness.

6. Air pressure probe (30) according to one of the preceding claims, **characterized in that** the housing surfaces (36a, 36b) arranged at an angle with respect to one another form a wedge-shaped, conical or round front housing side (34).

7. Air pressure probe (30) according to one of the preceding claims, **characterized in that** the air pressure probe (30) also has:

- a motion and/or acceleration sensor for capturing motion and/or acceleration data relating to the air pressure probe,
- a magnetometer for capturing magnetic field data, and/or
- a temperature sensor for capturing temperature data.

8. Air pressure probe (30) according to one of the preceding claims, **characterized in that** the air pressure probe (30) also has a radio transmission unit (43) which is designed to wirelessly transmit data captured by the air pressure probe (30) to a receiving station (21).

9. Measuring system (20) for gliding parachute systems (10), having an air pressure probe (30) according to one of the preceding claims and a processing unit (21), which can be fastened to a load (13) attached to the gliding parachute system (10), and a receiving unit for receiving the data captured and transmitted by the air pressure probe (30).

10. Measuring system (20) according to Claim 9, **characterized in that** the processing unit (21) has:

- at least one motion and/or acceleration sensor for capturing motion and/or acceleration data relating to the attached load (13) if the processing unit is arranged on the load,
- a magnetometer for capturing magnetic field data,
- a camera for recording image data containing the canopy of the gliding parachute system (10) if the processing unit (21) is arranged on the load (13), wherein the processing unit (21) is designed to determine a relative movement between the canopy (11) and the load (13) on the basis of the recorded image data,
- a position determination unit for determining the current position of the load if the processing unit is arranged in the load, and/or
- an altitude determination unit for determining the barometric altitude of the load if the processing unit is arranged on the load.

11. Gliding parachute system (10) having a canopy (11), a load (13) attached to the canopy via a harness (14) and an air pressure probe (30) according to one of Claims 1 to 8 which is arranged on the harness (14).

12. Gliding parachute system (10) according to Claim 11, **characterized in that** the gliding parachute system (10) has a measuring system (20) according to Claims 9 and 10, wherein the processing unit (21) is arranged on the attached load.

**Revendications**

1. Sonde de pression d'air (30) pour détecter des données de pression d'air d'un flux d'air ($R_{ström}$) passant autour de la sonde de pression d'air (30),
dans laquelle la sonde de pression d'air (30) comprend :

- un boîtier (31),
- au moins un capteur de pression d'air (38, 42) qui communique avec le flux d'air ($R_{ström}$) passant autour de la sonde de pression d'air (30) par l'intermédiaire d'une ouverture de boîtier (37, 39, 41a, 41b) ménagée dans le boîtier (31) et est conçu pour détecter des données de pression d'air concernant le flux d'air,
- un dispositif de fixation (33) conçu pour fixer la sonde de pression d'air (30) à un harnais (14) d'un système de parapente (10),

**caractérisée en ce que** le boîtier présente, en vis-à-vis du dispositif de fixation (33), une face de boîtier avant (34) qui comporte au moins deux surfaces de boîtier (36a, 36b) disposées en formant un certain angle l'une par rapport à l'autre et dont des faces de boîtier latérales (35) s'étendent dans la direction du dispositif de fixation (33), dans laquelle

- au moins une première ouverture de boîtier (39) pour détecter des données de pression d'air statiques est disposée dans l'une des faces latérales du boîtier (35), dans laquelle la sonde de pression d'air (30) présente au moins un capteur de pression d'air statique (38) qui est en communication par le biais de ladite au moins une première ouverture de boîtier (39) avec le flux d'air ($R_{ström}$) passant autour de la sonde de pression d'air (30) et est conçu pour détecter des données de pression d'air statique par le biais de la première ouverture de boîtier (39) reliée en communication, et au moins une deuxième ouverture de boîtier (37) pour détecter des données de pression d'air totale est disposée dans la face de boîtier avant (34), dans laquelle la sonde de pression d'air présente au moins un capteur de pression d'air totale (38) qui est en communication par le biais de la deuxième ouverture de boîtier (37) au moins avec le flux d'air ($R_{ström}$) passant autour de la sonde de pression d'air (30) et est conçu pour détecter des données de pression d'air totale par le biais de la deuxième ouverture de boîtier (37) reliée en communication, et dans laquelle ledit au moins un capteur de pression d'air statique et ledit au moins un capteur de pression d'air totale forment un capteur de pression différentielle (38) qui est conçu pour déterminer une pression d'air dynamique sous la forme d'une pression différentielle entre les données de pression d'air statique et les données de pression d'air totale, et il est prévu une unité d'évaluation (40) qui est conçue pour déterminer une vitesse d'écoulement du flux d'air passant autour de la sonde de pression d'air (30) en fonction de la pression d'air dynamique, et/ou
- au moins deux ouvertures de boîtier (41a, 41b) prévues à distance l'une de l'autre pour déterminer la pression différentielle afin de déterminer l'angle d'attaque sont respectivement disposées dans l'une des surfaces de boîtier (36a, 36b) de la face de boîtier avant (34) de manière à ce que leurs plans d'ouverture forment un certain angle l'un par rapport à l'autre, dans laquelle la sonde de pression d'air présente un capteur de pression différentielle (42) qui est en communication avec le flux d'air ($R_{ström}$) passant autour de la sonde de pression d'air (30) par le biais desdites au moins deux ouvertures (41a, 41b) prévues à distance l'une de l'autre et dont les plans d'ouverture forment un certain angle l'un par rapport à l'autre,

et pour déterminer une pression différentielle entre les données de pression d'air détectées par le biais des ouvertures de boîtier (41a, 41b) respectives, dans laquelle il est prévu une unité d'évaluation (40) qui est conçue pour déterminer un angle d'incidence par rapport au flux d'air ($R_{ström}$) passant autour de la sonde de pression d'air (30) en fonction de la pression différentielle déterminée.

2. Sonde de pression d'air (30) selon la revendication 1, **caractérisée en ce que** le dispositif de fixation (33) est conçu pour fixer de manière amovible la sonde de pression d'air (30) au harnais (14).

3. Sonde de pression d'air (30) selon la revendication 1 ou 2, **caractérisée en ce que** le dispositif de fixation (33) présente un logement de harnais prévu sur le boîtier (31), qui est conçu pour recevoir le harnais (14) dans ou sur le boîtier (31) et pour fixer la sonde de pression d'air (30) au harnais (14) reçu.

4. Sonde de pression d'air (30) selon l'une des revendications précédentes, **caractérisée en ce que** la sonde de pression d'air (30) présente au moins deux parties de boîtier (32a, 32b) entre lesquelles est formé le dispositif de fixation (33), de manière à ce que le harnais (14) puisse être mis en place entre les deux parties de boîtier (32a, 32b).

5. Sonde de pression d'air (30) selon l'une des revendications précédentes, **caractérisée en ce que** le dispositif de fixation (33) est conçu de manière à ce que la sonde de pression d'air (30) soit maintenue par serrage sur le harnais et/ou que la sonde de pression d'air (30) puisse être cousue sur le harnais.

6. Sonde de pression d'air (30) selon l'une des revendications précédentes, **caractérisée en ce que** les surfaces de boîtier (36a, 36b) disposées en formant un certain angle l'une par rapport à l'autre forment une face de boîtier avant (34) en forme de coin, sphérique ou ronde.

7. Sonde de pression d'air (30) selon l'une des revendications précédentes, **caractérisée en ce que** la sonde de pression d'air (30) comprend en outre :

   - un capteur de mouvement et/ou d'accélération pour détecter des données de mouvement et/ou d'accélération de la sonde de pression d'air,
   - un magnétomètre pour détecter des données de champ magnétique, et/ou
   - un capteur de température pour détecter des données de température.

8. Sonde de pression d'air (30) selon l'une des revendications précédentes, **caractérisée en ce que** la sonde de pression d'air (30) comprend en outre une unité de transmission radio (43) conçue pour transmettre sans fil à une station de réception (21) des données acquises par la sonde de pression d'air (30).

9. Système de mesure (20) pour systèmes de parachute (10), comprenant une sonde de pression d'air (30) selon l'une des revendications précédentes et une unité de traitement (21) qui peut être fixée à une charge (13) suspendue au système de parachute (10) et comporte une unité de réception pour recevoir les données détectées et transmises par la sonde de pression d'air (30).

10. Système de mesure (20) selon la revendication 9, **caractérisé en ce que** l'unité de traitement (21) comporte :

    - au moins un capteur de mouvement et/ou d'accélération pour détecter des données de mouvement et/ou d'accélération de la charge suspendue (13) lorsque l'unité de traitement est disposée sur la charge,
    - un magnétomètre pour détecter des données de champ magnétique,
    - une caméra pour acquérir des données d'image contenues du parachute du système de parapente (10) lorsque l'unité de traitement (21) est disposée sur la charge (13), dans lequel l'unité de traitement (21) est conçue pour détecter un mouvement relatif entre le parachute (11) et la charge (13) en fonction des données d'image acquises,
    - une unité de détermination de position pour déterminer la position actuelle de la charge lorsque l'unité de traitement est disposée sur la charge et/ou
    - une unité de détermination d'altitude pour détecter l'altitude barométrique de la charge lorsque l'unité de traitement est disposée sur la charge.

11. Système de parapente (10), comprenant un parachute (11), une charge (13) fixée au parachute par l'intermédiaire d'un harnais (14) et une sonde de pression d'air (30) selon l'une des revendications 1 à 8, disposée sur le harnais (14).

12. Système de parapente (10) selon la revendication 11, **caractérisé en ce que** le système de parapente (10) comporte un système de mesure (20) selon les revendications 9 et 10, dans lequel l'unité de traitement (21) est disposée sur la charge suspendue.

Figur 1

Figur 2

**IN DER BESCHREIBUNG AUFGEFÜHRTE DOKUMENTE**

**In der Beschreibung aufgeführte Patentdokumente**

- DE 3888608 T2
- DE 2842414 A1
- GB 2032860 A
- US 2676655 A
- EP 2527251 A2
- US 2009026319 A1